# EUROPEAN PATENT APPLICATION

(11) **EP 2 903 127 A1**
(43) Date of publication of application: **05.08.2015**
(21) Application number: 13840354.8
(22) Date of filing: 27.09.2013
(51) Int. Cl.: H02J 7/04, H01M 10/44, H02J 7/02

(54) **CHARGING DEVICE**

(30) Priority: 28.09.2012 JP 2012215540
(71) Applicant: Hitachi Koki Co., Ltd., Tokyo 108-6020 (JP)
(72) Inventor: ARADACHI, Takao, Ibaraki 312-8502 (JP); HORIE, Yuki, Ibaraki 312-8502 (JP)
(74) Representative: Parker, Andrew James
(86) International application number: PCT/JP2013/076353
(87) International publication number: WO 2014/051084

(57) **Abstract**

A charging device (100) having charging means (80, 90) for charging a secondary battery used in an electric tool, and control means (140) for controlling the charging means. The control means acquires rated charging voltage information indicating the rated charging voltage of battery cells (11) of the secondary battery, which is configured of a plurality of battery cells. The control means sets a target voltage of the secondary battery on the basis of the rated charging voltage information. And the control means controls the charging means so that the secondary battery reaches the target voltage.

## Description

### [Technical Field]

The present invention relates to a charging device for charging a secondary battery to be used in an electric power tool.

### [Background Art]

Charging devices for charging a battery pack to be used in an electric power tool have been known. The battery pack is made of a plurality of battery cells such as lithium-ion cells. The charging devices include a constant voltage power supply circuit, which charges a battery pack to a predetermined target voltage so as to accord with the rated charging voltage of the battery cells such as lithium-ion cells.

### [Prior Art Literature]

### [Patent Literature]

[Patent Literature 1] Japanese Patent Application Publication No. 2008-187790

### [Summary of Invention]

### [Problem to be Solved]

Lithium-ion cells currently prevailing as battery cells include various types depending on the rated charging voltage. Taking 3.6-V lithium-ion cells for example, the rated charging voltages may be specified at 4.2 V or 4.35 V. In the future, various batteries of different materials will be put to practical use and further, various batteries having different rated charging voltages will be manufactured. As to the aforementioned lithium-ion cells, the background suggests emergence of battery cells having higher rated charging voltages. However, the constant voltage power supply circuit in the aforementioned conventional charging devices is configured to work satisfactorily only at the rated charging voltage for the supposed type of battery cells. Accordingly, conventional charging devices have a problem that they cannot optimally charge different types of battery cells having rated charging voltages different from that of the supposed type of battery cells.

In view of such circumstances, an object of the present invention is to provide a charging device that can charge different types of secondary batteries, even if they are made of battery cells having different rated charging voltages.

### [Means for Solving Problem]

In order to attain the above object, the present invention provides a charging device comprising: charging means configured to charge a secondary battery used for an electric power tool, the secondary battery comprising a plurality of battery cells; and control means configured to control the charging means, wherein the control means obtains rating charging voltage information indicating a rating charging voltage of each of the plurality of battery cells, sets a target voltage of the secondary battery on the basis of the rating charging voltage information, and controls the charging means to charge the secondary battery to the target voltage.

The above-described charging device can charge a secondary battery while satisfying the specification requirements of the battery cells in the secondary battery.

Preferably, the control means is capable of setting a target voltage associated with the secondary battery to be charged, the target voltage being one of a plurality of target voltages, the plurality of target voltages corresponding to a plurality of secondary batteries which are different from each other. Such a charging device can appropriately charge a secondary battery by selecting one of the target voltages even if specifications for battery cells are different from each other.

Preferably, the charging means comprises voltage control means configured to charge the secondary battery to a first target voltage. The control means sets the target voltage to either one of the first target voltage and a second target voltage, the second target voltage being larger than the first target voltage. The control means controls a potential difference between the first target voltage and the second target voltage, when the control means controls the charging means to charge the secondary battery to the second target voltage.

By using the voltage control means in charging a secondary battery to the first target voltage, the charging device can precisely charge the secondary battery to the first target voltage. In charging the battery to the second target voltage, the voltage control means controls the charging with reference to the voltage difference between the first target voltage and the second target voltage. This approach achieves reliable charging of the secondary battery to the second target voltage.

Preferably, the charging device further comprises voltage detection means configured to detect a voltage of the secondary battery. When controlling the charging means to charge the secondary battery to the second target voltage, the control means charges the secondary battery to the first target voltage by using the voltage control means, then controls the potential difference on the basis of the voltage of the secondary battery detected by the voltage detection means, and controls the charging means to charge the secondary battery to the second target voltage.

In charging a secondary battery to the second target voltage, the charging device first charges the secondary battery to the first target voltage by means of the voltage control means. Accordingly, reliable charging of the secondary battery to the first target voltage is achieved. Thereafter, the voltage control means refers to the voltage of the secondary battery detected by the voltage detection means to control the charging based on the potential difference so that the voltage of the secondary battery will reach the second target voltage. Accordingly, reliable charging of the secondary battery from the first target voltage to the second target voltage is achieved.

Preferably, the charging device further comprising charging current control means configured to render a charging current constant, the charging current charging the secondary battery. The control means causes the charging current control means to decrease the constant current stepwise for charging the secondary battery to the second target voltage. This configuration ensures reliable charging of the secondary battery to the second target voltage.

Preferably, the control means further obtains cell number information indicating a number of cells in the secondary battery. The control means sets the target voltage based on the cell number information and the rated charging voltage information. This configuration achieves appropriate charging of various secondary batteries which are different from each other with respect to the number of cells.

Preferably, the charging device further comprises voltage detection means configured to detect a voltage of the secondary battery. The charging means comprises: current control means configured to render a charging current charging the secondary battery constant; and voltage control means configured to charge the secondary battery to a predetermined voltage which is lower than the target voltage. When the voltage of the secondary battery which has been charged by the voltage control means reaches the predetermined voltage, the control means calculates a potential difference between the target voltage and the detected voltage of the secondary battery by the voltage detection means, and then repeats an operation that the current control means flows a constant current to the secondary battery to charge the secondary battery to the target voltage, decreasing the constant current stepwise.

The above-described configuration enables the secondary battery to be charged to the target voltage with reference to a predetermined voltage. As a result, reliable charging of a secondary battery to the target voltage is achieved.

### [Advantageous Effects of Invention]

The charging device of the present invention can charge a secondary battery while satisfying the specification of the battery cells as the secondary battery.

### [Brief Description of Drawings]

[Fig. 1] Fig. 1 is a circuit diagram showing an electric configuration of a charging system according to the present embodiment.
[Fig. 2] Fig. 2 is a flowchart illustrating a charging method for the charger according to the present embodiment.
[Fig. 3] Fig. 3 is a flowchart showing the details of the charging control 1 shown in Fig. 2.
[Fig. 4] Fig. 4 is a flowchart showing the details of the charging control 2 shown in Fig. 2.
[Fig. 5] Fig. 5 shows a graph illustrating time change between a charging voltage and a charging current under the charging control 2 shown in Fig. 4.
[Fig. 6] Fig. 6 is a circuit diagram showing a voltage control/setting circuit and potentiometers of the modification according to the present invention.

### [Description of Embodiments]

Hereinafter, embodiments of the present invention will be described with reference to the drawings.

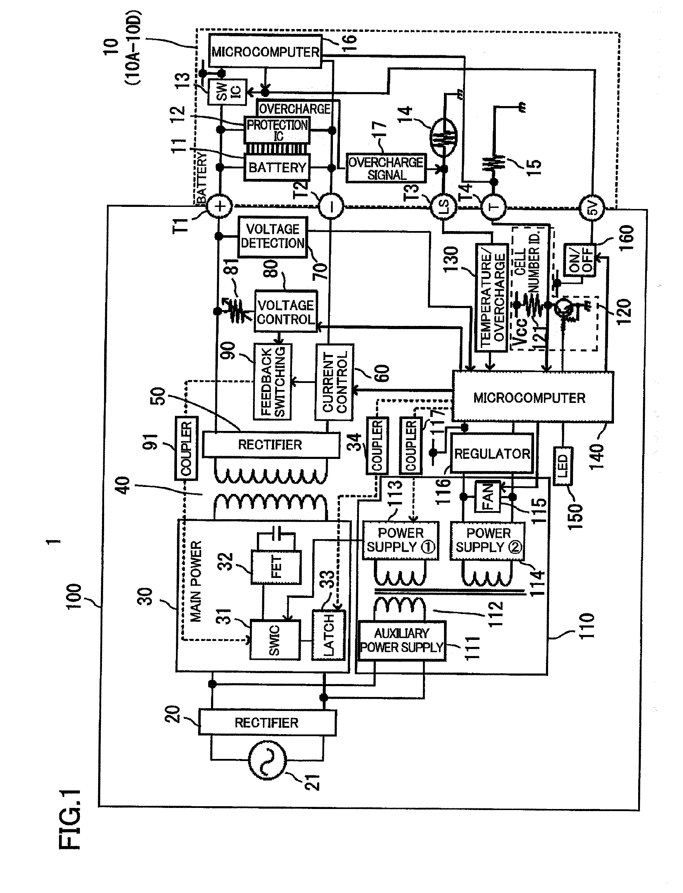

FIG. 1 illustrates a charging system 1 according to the present invention. The charging system 1 includes a battery pack 10 and a charging device 100 for charging the battery pack 10. The battery pack 10 is removable from the charging device 100. The battery pack 10 is used in an electric power tool.

The battery pack 10 includes a battery assembly 11 as a secondary battery, a protection IC 12, a switching IC 13, a temperature detection component 14, a battery-type identification component 15, a battery-side microcomputer 16, and an overcharge signal input 17 in a main casing.

The battery assembly 11 is composed of, for example, a plurality of lithium-ion battery cells. In the case where the battery assembly 11 is composed of the plurality of battery cells, a predetermined number of battery cells or a predetermined number of sets of battery cells connected in parallel are connected in series.

The protection IC 12 monitors the voltages of the battery cells. When determining that an anomaly such as an overvoltage occurs in at least one of the battery cells, the protection IC 12 outputs an overcharge signal.

The battery-type identification component 15 is comprised of a resistor having a resistance value unique to the number of cells in the battery assembly 11, the connecting configuration of the battery cells, and the rated charging voltage for the battery cells. When the battery pack 10 is mounted on the charging device 100, one end of the battery-type identification component 15 is electrically connected to the charging device 100 through a terminal T4 to form an electric circuit with the charging device 100. The rated charging voltage means a potential difference arising between the electrodes of a battery cell in charging the battery cell.

The temperature detection component 14 is comprised of a thermistor. The temperature detection component 14 is disposed in contact with or adjacent to the battery assembly 11 and has the resistance value varying with the battery temperature inside the battery pack 10. When the battery pack 10 is mounted on the charging device 100, one end of the thermistor 14 is connected to the charging device 100 through a terminal T3 to form an electric circuit with the charging device 100.

The switching IC 13 applies a voltage of 5 V from the charging device 100 to the battery-side microcomputer 16.

Next, the charging device 100 will be described. The charging device 100 includes a primary-side rectifier 20, a main power supply 30, a transformer 40, a secondary-side rectifier 50, a current control/setting circuit 60, a battery-voltage detection circuit 70, a voltage control/setting circuit 80, a feedback switching circuit 90, a constant voltage power supply 110, a battery-type identification circuit 120, a battery-temperature and overcharge detection circuit 130, a device-side microcomputer 140, and a display means 150.

The primary-side rectifier 20 rectifies and outputs the alternating power supplied from an alternating power supply 21.

The main power supply 30 includes a switching IC 31, a field-effect transistor (FET) 32, and a latch circuit 33. The main power supply 30 adjusts the output power to the primary side of the transformer 40 with PWM control using the switching IC 31 and the FET 32. The latch circuit 33 forcibly terminates charging the battery pack 10 in accordance with a signal received via a coupler 34 from the device-side microcomputer 140.

The secondary-side rectifier 50 rectifies the pulsed power supplied from the secondary side of the transformer 40 and supplies the rectified power to the battery pack 10.

The current control/setting circuit 60 sets a charging current for the battery pack 10 in accordance with a signal from the device-side microcomputer 140, detects the charging current flowing in the battery pack 10, and outputs a signal corresponding to the detected charging current to the feedback switching circuit 90.

The battery-voltage detection circuit 70 is comprised of two resistors connected in series and determines the voltage of the battery pack 10 with reference to the voltage division of the resistors. The microcomputer 140 converts the voltage indicated by the battery-voltage detection circuit 70 from analog to digital to obtain a value indicating the charging voltage.

The voltage control/setting circuit 80 controls the charging voltage for the battery pack 10 with a potentiometer 81. The voltage control/setting circuit 80 controls the charging so that the battery pack 10 will be fully charged to a predetermined first voltage. The first voltage is determined to be lower than the voltage for a selected type of battery pack 10, for example at a specific value lower than the rated charging voltage for the battery pack 10 by a little less than 1%. In this embodiment, a battery pack 10A composed of ten battery cells connected in series, each battery cell having a rated charging voltage of 4.2 V, is used as the battery pack 10. Since ten 4.2-V battery cells are connected in series, the rated charging voltage of the whole battery pack 10A is 42 V. Accordingly, the resistance value of the potentiometer 81 may be determined assuming that the target voltage is determined at 41.7 V, which is the first voltage lower than the rated charging voltage by a little less than 1%. In other words, the potentiometer 81 is set to correspond to the rated charging voltage of the battery pack 10A. The reason why the first voltage is determined to be lower than the rated charging voltage of the battery pack 10A is merely because it is an example of a means to prevent overcharge of the battery pack 10 caused by charging at a voltage higher than the rated charging voltage. Depending on the resistance value of the potentiometer 81, the target voltage can be set at any voltage equal to or lower than the rated charging voltage.

The feedback switching circuit 90 sends a signal to the main power supply 30 via a coupler 91, instructing the main power supply 30 to set the charging voltage and the charging current for the battery pack 10 at the target values in accordance with the output signals from the current control/setting circuit 60 and the voltage control/setting circuit 80.

The constant voltage power supply 110 includes an auxiliary power supply 111, a transformer 112, power supplies 113, 114, a fan 115, and a regulator 116. The constant voltage power supply 110 generates a direct voltage Vcc from the voltage supplied from the primary-side rectifier 20 and supplies Vcc to the device-side microcomputer 140. The constant voltage power supply 110 stops operation in accordance with a signal sent via a coupler 117 from the device-side microcomputer 140.

The battery-type identification circuit 120 includes a resistor 121 having a predetermined resistance value.

When no battery pack 10 is mounted on the charging device 100, the battery-type identification circuit 120 applies the direct voltage Vcc to the device-side microcomputer 140.

The battery-temperature and overcharge detection circuit 130 sends a temperature signal indicating the temperature of the battery pack 10 to the device-side microcomputer 140 with reference to the resistance value of the thermistor 14. The battery-temperature and overcharge detection circuit 130 also sends an overcharge signal to the device-side microcomputer 140 when receiving the overcharge signal from the battery pack 10.

The display means 150 is comprised of LEDs and is connected with the device-side microcomputer 140. The display means 150 indicates the state of the battery pack: un-mounted, charging, or finished, by changing the emission color of the LEDs.

The device-side microcomputer 140 determines the resistance value of the battery-type identification component 15 with reference to the voltage value supplied from the battery-type identification circuit 120, identifies the type of the battery cells, the rated charging voltage for the battery cells, the number of battery cells, and the connecting configuration of the battery cells in the battery pack 10, and outputs a start charging signal to the main power supply 30. Specifically, the charging device 100 stores correspondence relations of the resistance values of the battery-type identification component 15 with the types of battery cells, the rated charging voltages for the battery cells, the numbers of battery cells, and the connecting configurations of the battery cells in a plurality of memories in advance. The charging device 100 uses these correspondence relations and the determined resistance value of the battery-type identification component 15, when the type of the battery cells, the rated charging voltage for the battery cells, the number of battery cells, and the connecting configuration of the battery cells are determined.

If the device-side microcomputer 140 detects an anomaly in charging the battery pack 10 with the battery-temperature and overcharge detection circuit 130, the device-side microcomputer 140 forcibly stops the charging of the battery pack 10.

The charging device 100 further includes a switching circuit 160 for switching on and off whether to supply power to the battery pack 10 mounted on the charging device 100.

Next, charging a battery pack 10 by the charging system 1 will be described. The charging device 100 in the present embodiment can charge different types of battery packs 10. Specifically, the charging device 100 can charge a battery pack 10 rated at a specific charging voltage such as the aforementioned battery pack 10A having a rated charging voltage of 42 V, and in addition, can charge another battery pack 10 having a rated charging voltage higher than 42 V. For example of the other battery pack 10 having a rated charging voltage higher than 42 V, the charging device 100 can charge a battery pack 10B composed of ten battery cells connected in series, each battery cell having a rated charging voltage of 4.35 V and therefore the battery pack having a rated charging voltage of 43.5 V.

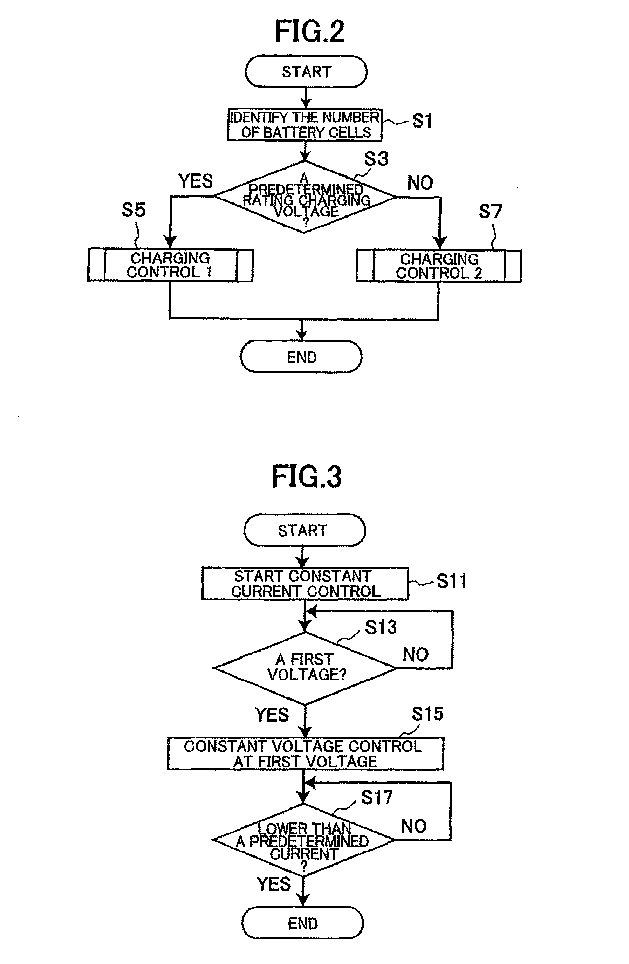

FIG. 2 is a flowchart illustrating a method of charging a battery pack 10. In S1, the microcomputer 140 determines the resistance value of the battery-type identification component 15 with reference to the voltage input from the battery-type identification circuit 120 and identifies the number of battery cells, the rated charging voltage of the battery cells, and the connecting configuration of the battery cells in the battery pack 10. In S3, the microcomputer 140 determines whether the rated charging voltage of the battery pack 10 is a voltage (42 V) corresponding to the resistance value of the potentiometer 81. If the determination in S3 is made that the rated charging voltage of the battery pack 10 is a voltage corresponding to the resistance value of the potentiometer 81, that is, if the microcomputer 140 determines that a battery pack 10A is mounted on the charging device 100 (S3: YES), the microcomputer 140 performs charging control 1 in S5. If the determination in S3 is made that the rated charging voltage of the battery pack 10 is not a voltage corresponding to the resistance value of the potentiometer 81 (S3: NO), the microcomputer 140 performs charging control 2 in S7. Upon completion of the charging control of S5 or S7, the microcomputer 140 terminates the processing.

FIG. 3 is a flowchart illustrating the details of the charging control 1 in S5. The charging control 1 controls the charging of a battery pack 10A to the target voltage of a first voltage, for example, 41.7 V. As described above, the target voltage is a voltage of the battery pack 10 when the charging device 100 completes the charging. In S11, the microcomputer 140 controls the current control/setting circuit 60 to set the charging current at a predetermined current value amperage (for example, 3 A) and starts constant current charging. In S13, the microcomputer 140 determines whether the voltage of the battery pack 10 detected by the voltage detection circuit 70 is the first voltage (41.7 V). If the determination in S13 is made that the voltage of the battery pack 10 is not the first voltage (S13: NO), the microcomputer 140 continues the constant current charging and repeats the determination of S13. If the determination in S13 is made that the voltage of the battery pack 10 is the first voltage (S13: YES), the microcomputer 140 starts constant voltage charging at the first voltage (41.7 V) with the voltage control/setting circuit 80 in S15. After the start of the constant voltage charging, the charging current gradually decreases.

In S17, the microcomputer 140 determines whether the charging current has been decreased to a predetermined current value (for example, 1 A). If the determination in S 17 is made that the charging current has not been decreased to the predetermined value (1 A) (S17: NO), the microcomputer 140 continues the constant voltage charging and repeats the determination of S 17. If the determination in S 17 is made that the charging current has been decreased to the predetermined value (1 A) (S17: YES), the microcomputer 140 determines that the battery pack 10A has been fully charged and terminates the charging.

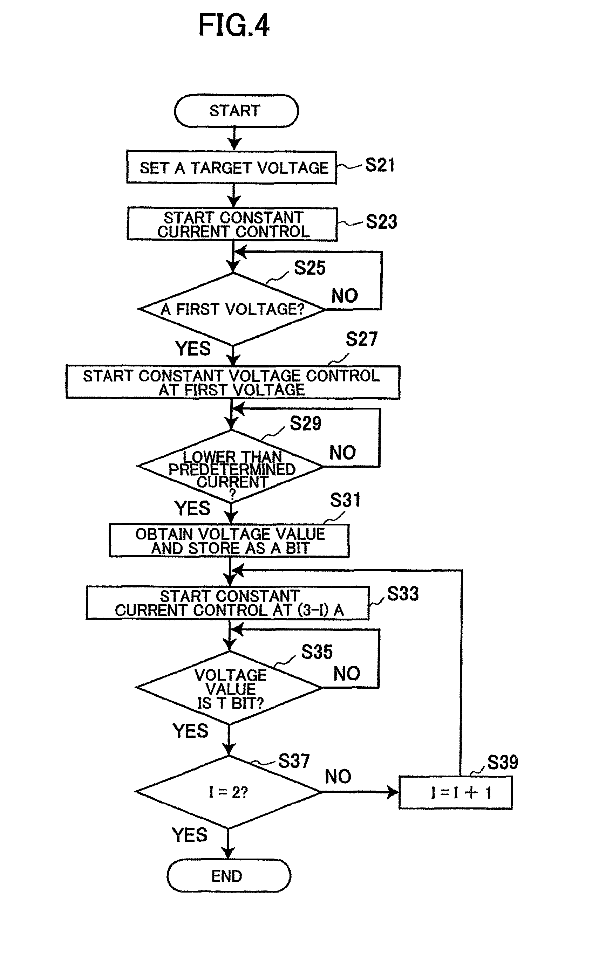

FIG. 4 is a flowchart illustrating the details of the charging control 2 in S7. The charging control 2 relates to charging when a battery pack 10B is mounted. In S21, the microcomputer 140 determines the target voltage. Assuming that the battery pack 10B is comprised of ten battery cells connected in series, each battery cell having a rated charging voltage of 4.35 V and the battery pack having a rated charging voltage of 43.5 V, the microcomputer 140 determines the predetermined target voltage for this rated charging voltage of 43.5 V at a voltage slightly a little less than 1% in this case, lower than the rated charging voltage, 43.2 V (hereinafter, referred to as second voltage). Furthermore, the microcomputer 140 initializes a variable i to 0. In S23, the microcomputer 140 sets the charging current of the current control/setting circuit 60 at a predetermined current value (3 A) and starts constant current charging. In S25, the microcomputer 140 determines whether the voltage of the battery pack 10B detected by the voltage detection circuit 70 is the first voltage (41.7 V). When the determination in S25 is made that the voltage of the battery pack 10B is not the first voltage (S25: NO), the microcomputer 140 continues the constant current charging and repeats the determination of S25. If the determination in S25 is made that the voltage of the battery pack 10B is the first voltage (S25: YES), the microcomputer 140 starts constant voltage charging at the first voltage (41.7 V) with the voltage control/setting circuit 80 in S27.

Subsequently in S29, the microcomputer 140 determines whether the charging current detected by the current control/setting circuit 60 is a predetermined current value (for example, 1 A). If the determination in S29 is made that the charging current is not the predetermined current value, the microcomputer 140 continues the constant voltage charging and repeats the determination of S29. If the determination in S29 is made that the charging current has reached the predetermined current value, the microcomputer 140 proceeds to S31.

In S31, the microcomputer 140 stores a digital value corresponding to the actual voltage in a memory. More specifically, the digital value is a parameter A (in bits) representing the voltage of the battery pack 10B detected by the voltage detection circuit 70 when the charging current value is a predetermined value (1 A). The microcomputer 140 further stores the second voltage of the target voltage for the battery pack 10B as a digital value of a target value T (in bits). The difference (Tbit - Abit) between the second voltage (43.2 V) and the first voltage (41.7 V) is defined as X (in bits). The X bit is a digital value corresponding to the potential difference of 1.5 V between the second voltage (43.2 V) and the first voltage (41.7 V). The microcomputer 140 uses a predefined relationship between the voltage used in AD conversion of the voltage detected by the voltage detection circuit 70 and the corresponding digital value to calculate the X bit. In this embodiment, if a digital value corresponding to a voltage width of 1 V is assumed to be 6, the X bit corresponding to the potential difference of 1.5 V corresponds to a value 9. It should be noted that the memory of the microcomputer 140 stores a plurality of values for X bit in association with the types of battery packs (the resistance values of battery-type identification component 15). Accordingly, the microcomputer 140 may select one from the stored values for the X bit in accordance with the type of the battery pack 10 (the resistance value of the battery-type identification component 15).

The voltage detection circuit 70 is comprised of a resistor. Resistors cannot be precise but may have an error of approximately ±1%; accordingly, the voltage detected by the voltage detection circuit 70 includes an approximately ±1% error in the overall voltage. In contrast, the voltage control/setting circuit 80 can control the battery pack 10 to have a specific voltage such as the first voltage of 41.7 V with sufficiently high precision (with an error small enough to be ignored in practical use). Here is provided an example: in the case of ignoring the error, the microcomputer 140 is configured to set a digital value 500 for the voltage detected by the voltage detection circuit 70 when the current value detected by the current control/setting circuit 60 is 1A. That is to say, it is assumed that the digital values in the charging device 100 are defined to correspond to voltages. Therefore, the charging voltage detected by the voltage detection circuit 70 corresponds to a digital value 500, when the voltage of the battery pack 10 is 41.7 V.

In an actual case, however, even if the actual voltage of the battery pack 10 is exactly 41.7 V, the digital value corresponding to the voltage detected by the voltage detection circuit 70 may indicate "505", deviating from "500", because of the error of the resistor in the voltage detection circuit 70 or resolution of the microcomputer. In other words, the digital value is a relative value inclusive of the error. In this embodiment, the digital value "505" actually corresponds to the voltage 41.7 V of the battery pack 10B. In this situation, the digital target value T bit for the second voltage (43.2 V) is "514" (= the sum of the relative value "505" for 41.7 V and the digital value "9" corresponding to the potential difference of 1.5 V).

Next, in S33, the microcomputer 140 sets the charging current at (3 - i) A and starts constant current charging at (3 - i) A. Since the initial value for i is 0 as described above, in S33 constant current charging at 3 A is performed for the first time. In S35, the microcomputer 140 determines whether the voltage of the battery pack 10B detected by the voltage detection circuit 70 has reached the digital value (514) corresponding to the target value of the second voltage (43.2 V). The determination in S35 is repeated until the voltage of the battery pack 10B reaches the digital value corresponding to the second voltage (43.2 V) (S35: YES). When, in S35, the voltage of the battery pack 10B is determined to be the digital value corresponding to the second voltage (43.2 V) (S35: YES), the microcomputer 140 determines in S37 whether the value of the variable i is 2, that is, whether constant current charging at a predetermined current value of 1 A (= 3 - 2) has been performed. If the determination in S37 is made that constant current charging at the predetermined current value of 1 A is not performed (S37: NO), the microcomputer 140 increments the value of the variable i by 1 in S39 and repeats the processing from S33.

If the determination in S37 is made that constant current charging at 1 A has been performed (S37: YES), the microcomputer 140 determines that the battery pack 10B has been charged to the second voltage, that is, fully charged, and exits the charging control 2.

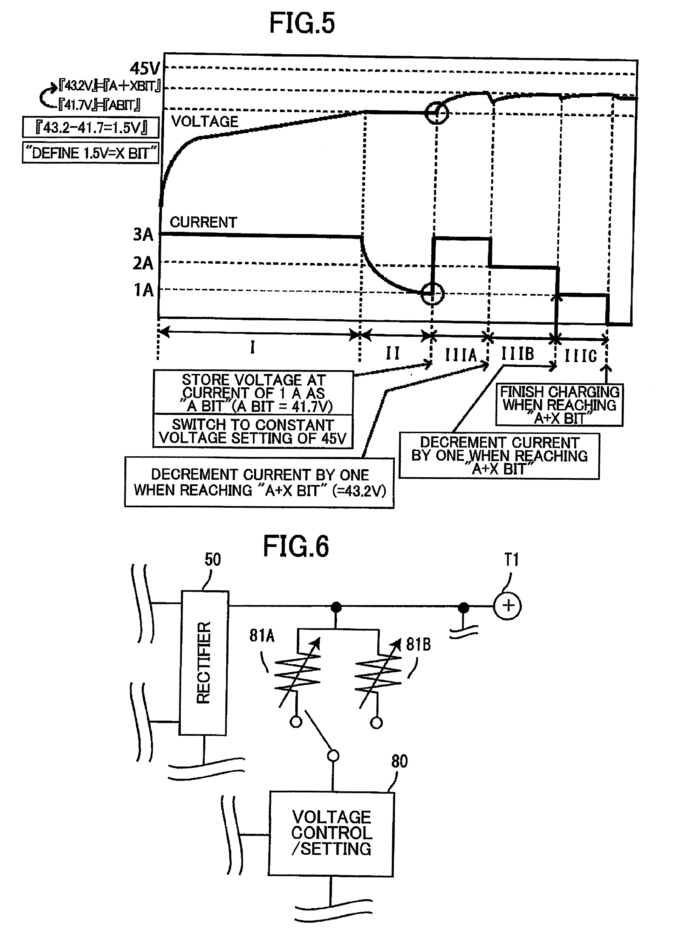

FIG. 5 is a graph showing the variation in battery voltage and charging current over time in charging the battery pack 10B in accordance with the charging control 2. The section I corresponds to the constant current control at the first predetermined current value (3 A) started in S23; the section II corresponds to the constant voltage control at the first voltage (41.7 V) started in S27. The section III corresponds to the stepwise constant current control started in S33; the sections IIIA, IIIB, and IIIC correspond to the three charging currents 3 A, 2 A, and 1 A, respectively. When the section II ends, the charging up to the exact first voltage (41.7 V) is completed. In the charging for the voltage difference (1.5 V) from the first voltage (41.7 V) to the target voltage (42.3 V) (section III), the charging device 100 performs constant current control based on the first voltage (41.7 V) of the target voltage of the battery pack 10A and repeats determination whether the voltage has reached the second voltage of T bit (digital value: 514) representing the full charge of the battery pack 10B with reference to the digital value 505 corresponding to the first voltage (41.7 V). Accordingly, if the resistor included in the voltage detection circuit 70 has an error of approximately ±1%, the error causes only ±1% error for the voltage difference (1.5 V). Since the approximately ±1% error for the voltage difference 1.5 V is a sufficiently small value for the overall voltage, even though considering the error in detection of the voltage difference from the accurately controlled reference voltage 41.7 V, the battery pack 10B can be charged to the second voltage of 43.2 V with high precision enough for practical use. The section III illustrates, although not essential, an approach that reduces the current value step by step in the constant current control. This approach is more preferable to ensure charging to 43.2 V.

In the above-described charging, the charging device 100 acquires a resistance value of the battery-type identification component 15 for the information indicating the rated charging voltage of the battery cells in the battery pack 10, sets a target voltage for the battery pack 10 in accordance with the information, and charges the battery pack 10. Accordingly, appropriate charging depending on the type of the battery pack 10 can be achieved.

The charging control 1 has been described assuming that a battery pack 10A is to be charged. However, the charging control 1 is applicable to a battery pack 10 configured differently from the battery pack 10A as far as the rated charging voltage of the battery pack 10 is the same as the battery pack 10A. In similar, the charging control 2 is applicable to a battery pack 10 configured differently from the battery pack 10B as far as the rated charging voltage of the battery pack 10 is the same as the battery pack 10B.

Although the charging control 2 has been described with an example where the target voltage is 43.2 V, any target voltage can be selected as far as the target voltage is higher than a reference voltage (41.7 V) of the first voltage. For example, if the rated charging voltage for a battery pack 10C is 45 V, the battery pack 10 is charged by setting, in S21, the target voltage at 44.7 V, which is lower than the rated charging voltage by a little less than 1%, and setting, in S35, the X bit to a digital value 18 corresponding to the voltage difference of 3 V (= 44.7 V - 41.7 V). Accordingly, the single charging device 100 can precisely charge a plurality of types of battery packs 10.

The charging control 2 provides charging based on the voltage difference. In general, lithium ion batteries demand higher precision in a charging voltage (more particularly, the charging voltage for each battery cell). If the charging voltage is lower compared to the rated charging voltage, the charging amount will be insufficient for the battery capacity. If the charging voltage is higher compared to the rated charging voltage, overcharge will significantly reduce the battery life. In this embodiment, charging to the reference voltage (41.7 V) of the first voltage with high precision is performed using the voltage control/setting circuit 80. Charging for the voltage difference from the reference voltage (41.7 V) to the target voltage (43.2 V) of the second voltage is performed based on the voltage of the battery pack detected by the voltage detection circuit 70. Accordingly, highly precise charging to the target voltage (43.2 V) can be achieved compared to the existing techniques that the overall voltage detected by the voltage detection circuit 70 is used in the control.

The charging device 100 of the present invention is not limited to the foregoing embodiment but can be modified or improved in various ways within the scope of the claims.

For example, in the foregoing embodiment, the voltage control/setting circuit 80 is connected with one potentiometer 81 defining the reference voltage of the first voltage; however, the charging device may include multiple potentiometers 81 so that the voltage control/setting circuit 80 can connect to one of the potentiometers corresponding to multiple reference voltages, depending on the target voltage.

Specifically, as illustrated in FIG. 6, two potentiometers 81A and 81B may be provided. One potentiometer 81A is configured for constant voltage control at the reference voltage (41.7 V) for a battery pack 10A having a rated charging voltage of 42.0 V and the other potentiometer 81B is configured for constant voltage control at the reference voltage (16.6 V) for a battery pack 10C having a rated charging voltage of 16.8 V. An example of the battery pack 10C having a rated charging voltage of 16.8 V is comprised of four battery cells connected in series, each battery cell having a rated charging voltage of 4.2 V. When identifying that a battery pack 10A is mounted through determination of the resistance value of the battery-type identification component 15, the microcomputer 140 connects the voltage control/setting circuit 80 to the potentiometer 81A to perform charging at a reference voltage of 41.7 V, specifically the same charging in accordance with the charging control 1. In contrast, when identifying that a battery pack 10C is mounted, the microcomputer 140 connects the voltage control/setting circuit 80 to the potentiometer 81B to perform charging at a reference voltage of 16.6 V, specifically the same charging in accordance with the aforementioned charging control 1 (FIG. 2) while reading the value of the reference voltage as 16.6 V.

When another battery pack 10D having a rated charging voltage of 21.0 V is mounted, the microcomputer 140 determines that the rated charging voltage of the battery pack 10D does not match either 42.0 V or 16.8 V of the rated charging voltage associated with the potentiometer 81A or 81B. The microcomputer 140 selects the potentiometer 81B associated with the rated charging voltage of 16.8 V which is lower than and closest to the rated charging voltage 21 V of the battery pack 10D and connects the voltage control/setting circuit 80 to the potentiometer 81B. The battery pack 10D having a rated charging voltage of 21.0 V has a rated output voltage of 18 V and is comprised of five battery cells connected in series, each battery cell having a rated charging voltage of 4.2 V. The microcomputer 140 sets the target voltage at 20.8 V, which is lower than 21.0 V of the rated charging voltage of the battery pack 10D by a little less than 1%. The subsequent charging is the same as described above with the charging control 2 except that the target voltage in S21 is 20.8 V, that the voltage determined in S25 is 16.6 V, and that the X bit is set at a value corresponding to the voltage difference of 4.2 V (= 20.8 - 16.6 V).

Although FIG. 6 shows an example including two potentiometers 81, three or more potentiometers 81 may be included. In such an example, if no potentiometer 81 exists that matches the rated charging voltage of the battery pack 10 mounted on the charging device 100, the microcomputer 140 selects the rated charging voltage which is lower than and the closest to the rated charging voltage for the battery pack 10 among the rated charging voltages associated with the potentiometers 81, selects the potentiometer 81 associated with the selected rated charging voltage, and connects the voltage control/setting circuit 80 to the potentiometer 81.

Provision of multiple potentiometers 81 enables precise charging of different kinds of battery packs 10, each of which is widely different from each other as to the target voltage. As described above, a battery pack 10A is formed of ten battery cells connected in series and a battery pack 10C is formed of four battery cells connected in series. Such a large difference in number of serially connected battery cells usually leads to a large difference in rated charging voltage. However, the multiple potentiometers 81 enable appropriate and precise charging of such battery packs.

Instead of providing multiple potentiometers 81, the voltage control/setting circuit 80 may be configured to automatically adjust the resistance value of a potentiometer 81 in accordance with the kind of the battery pack 10.

In this embodiment, in the section III (FIG. 5), constant current control is performed by lowering the amperage by 1 A in each step. The decrement in the current value is not limited to 1 A. For example, the current value may be lowered by 0.5 A. Alternatively, the decrement may be increased or decreased step by step.

### [Industrial Applicability]

The charging device of the present invention can be used in charging a battery pack to be used in an electric power tool.

### [Explanation of Reference]

1 charging system
10(10A-10D) battery pack
60 current control/setting circuit
80 voltage control/setting circuit
81 potentiometer
100 charging device
140 microcomputer

## Claims

1. A charging device comprising:
charging means configured to charge a secondary battery used for an electric power tool, the secondary battery comprising a plurality of battery cells; and
control means configured to control the charging means, **characterized in that** the control means obtains rating charging voltage information indicating a rating charging voltage of each of the plurality of battery cells, sets a target voltage of the secondary battery on the basis of the rating charging voltage information, and controls the charging means to charge the secondary battery to the target voltage.

2. The charging device as claimed in claim 1, **characterized in that** the control means is capable of setting a target voltage associated with the secondary battery to be charged, the target voltage being one of a plurality of target voltages, the plurality of target voltages corresponding to a plurality of secondary batteries which are different from each other.

3. The charging device as claimed in claim 1 or 2, **characterized in that** the charging means comprises voltage control means configured to charge the secondary battery to a first target voltage,
the control means sets the target voltage to either one of the first target voltage and the second target voltage, the second target voltage being larger than the first target voltage, and
the control means controls a potential difference between the first target voltage and a second target voltage, when the control means controls the charging means to charge the secondary battery to the second target voltage.

4. The charging device as claimed in claim 3, further comprising:
voltage detection means configured to detect a voltage of the secondary battery, **characterized in that** when controlling the charging means to charge the secondary battery to the second target voltage, the control means charges the secondary battery to the first target voltage by using the voltage control means, then controls the potential difference on the basis of the voltage of the secondary battery detected by the voltage detection means, and controls the charging means to charge the secondary battery to the second target voltage.

5. The charging device as claimed in claim 3 or 4, further comprising:
charging current control means configured to render a charging current constant, the charging current charging the secondary battery, **characterized in that**
the control means causes the charging current control means to decrease the constant current stepwise for charging the secondary battery to the second target voltage.

6. The charging device as claimed in any one of claims 1 to 5, **characterized in that** the control means further obtains cell number information indicating a number of cells in the secondary battery,
the control means sets the target voltage based on the cell number information and the rated charging voltage information.

7. The charging device as claimed in claim 1, further comprising voltage detection means for detecting a voltage of the secondary battery, **characterized in that**
the charging means comprises:
current control means configured to render a charging current charging the secondary battery constant; and
voltage control means configured to charge the secondary battery to a predetermined voltage which is lower than the target voltage, wherein
when the voltage of the secondary battery which has been charged by the voltage control means reaches the predetermined voltage, the control means calculates a potential difference between the target voltage and the detected voltage of the secondary battery by the voltage detection means, and then repeats an operation that the current control means flows a constant current to the secondary battery to charge the secondary battery to the target voltage, decreasing the constant current stepwise.
